# EUROPÄISCHE PATENTSCHRIFT

(11) **EP 0 303 098 B1**
(45) Veröffentlichungstag und Bekanntmachung des Hinweises auf die Patenterteilung: **30.11.1994**
(21) Anmeldenummer: 88112027.3
(22) Anmeldetag: 26.07.1988
(51) Int. Cl.: B29C 67/14, C08J 5/24, B29C 43/22, B29B 15/12

(54) **Verfahren zur kontinuierlichen Herstellung von Prepregs mit einer hohen Fasermasse**
Method for the continuous production of prepregs with a high fibre content
Procédé pour la fabrication en continu des préimprégnés avec un contenu élevé en fibres

(30) Priorität: 14.08.1987 DE 3727185
(43) Veröffentlichungstag der Anmeldung: 15.02.1989
(73) Patentinhaber: DANUTEC Werkstoff Gesellschaft m.b.H, A-4021 Linz (AT)
(72) Erfinder: Schnell, Peter, A-4710 Grieskirchen (AT); Maier-Lehner, Franz, A-4715 Obertrattnach, 70 (AT); Spaun, Rüdiger, Dipl.-Ing., A-4040 Linz (AT)
(74) Vertreter: Kunz, Ekkehard, Dr.

(56) Entgegenhaltungen:
- AU-A- 205 327
- GB-A- 1 142 801
- US-A- 4 238 176
- PATENT ABSTRACTS OF JAPAN vol. 10, no. 28 (C-326) 4. Februar 1986& JP-A-60 181 136 (TORAY ) 14. September 1985

## Beschreibung

Die Erfindung betrifft ein Verfahren zur kontinuierlichen Herstellung von Prepregs mit einer hohen Fasermasse in einer Doppelbandpresse mit Druckheizzone und integrierter Druckkühlzone.

Aus GB 1,542.153 ist bekannt, Verstärkungsfasern mit hitzehärtbarem Harz zu tränken und unter Einwirkung von Hitze und/oder Druck im A-Zustand zu belassen, oder höchstens in den B-Zustand überzuführen. Die dabei hergestellten Prepregs sind allerdings dünn, sie weisen nur Flächengewichte von 150 bis 250 g/m² auf. Die Prepreg-Herstellung erfolgt dabei in zwei getrennten Schritten, indem zuerst ein dünner Harzfilm aufgetragen und gegebenenfalls vorhandenes Lösungsmittel entfernt wird, wodurch ein lösungsmittelfreier, trockener und aufspulbarer Harzfilm entsteht. In einem zweiten Schritt werden zwei derartige Harzfilme gemeinsam mit einer Lage aus Kohlenstoff- oder Glasfaser durch Walzenspalten einer Anzahl erhitzter Einzelrollen geführt, wodurch ein Prepreg gebildet wird. Der Hauptnachteil dieses Verfahrens besteht darin, daß zwei getrennte Arbeitsgänge notwendig sind.

Die übliche Prepregherstellung erfolgt jedoch ohne Anwendung von Druck in turmartigen Kammern, in denen das harzgetränkte Verstärkungsmaterial aufwärts und abwärts geführt wird, wobei das meist vorhandene Lösungsmittel mittels warmer Umluft verdampft wird, und das Harz in den B-Zustand übergeht (E.W. Laue "Glasfaserverstärkte Polyester und andere Duromere", 1969, Seiten 311 bis 318). In solchen Turmanlagen werden meist Gewebe, und nicht Rovings verarbeitet, da die Faserführung zu kompliziert ist: Jeder Faserstrang muß einzeln geführt werden, wozu eine Vielzahl von Spulen und Führungseinrichtungen notwendig ist. Bei einer üblichen Turmhöhe von 10 bis 20 m, die jeder Faserstrang hinauf und hinunter durchlaufen muß, besteht immer die Gefahr, daß einzelne Rovingstränge oder Einzelfilamente übereinanderlaufen, wodurch die Glasverteilung im Pregreg nicht mehr homogen ist. Solche großen Turmanlagen dienen daher nicht zur Herstellung von Roving-Prepregs, sondern von Gewebeprepregs, üblicherweise unter Verwendung eines Lösungmittels, das gesondert aufgearbeitet werden muß. Wird kein Lösungsmittel verwendet, so ist die Benetzung der Faser mit dem Harz schwieriger, die Imprägniergüte nimmt ab. Sollen dickere Prepregs mit einem höheren Fasergehalt hergestellt werden, so nimmt die Imprägniergüte ebenfalls mit zunehmendem Fasergehalt ab (Wiedemann u.a. in "Plastverarbeiter", 32. Jahrgang (1981) 4, Seiten 459 -464, Absatz 3.4).

Für dichte Gewebetypen wurde auch schon vorgeschlagen, das Gewebe vor Erreichen des Imprägnierturmes zur Verbesserung der Imprägnierqualität durch einen abgedichteten Imprägnierkessel, durch den die Imprägnierlösung unter Druck hindurchgepumpt wird, zu führen (Laue, Seite 314). Ein kontinuierliches verfahren zur Herstellung von Prepregs aus duroplastischen Harzen, geschnittenen Glasfasern und inerten Füllstoffen mit einem Glasfaseranteil von maximal 30 Gew.% wird in der US-A-4,238,176 Beschrieben.

Aufgabe der vorliegenden Erfindung war es daher, ein einfaches verfahren zur Herstellung von Prepregs aus Rovings oder aus Kombinationen von Rovings mit Geweben, Gelegen oder Vliesen zu finden, das ohne Verwendung eines Imprägnierturmes und ohne Verwendung Von Lösungsmitteln die Herstellung von Prepregs mit hoher Fasermasse ermöglicht.

Die Lösung dieser Aufgabe besteht darin, daß die Feserimprägnierung und Überführung des Harzes in den B-Zustand in horizonteler Anordnung in einer Doppelbandpresse erfolgt, wobei das Herz des imprägnierten Fesermaterials in einer Druckheizzone in den B-Zustand übergeführt wird, der in der Druckkühlzone, welche in die Doppelbandpresse integriert ist, stabilisiert, "eingefroren" wird.

Gegenstand der vorliegenden Erfindung ist demnach ein Verfahren zur Herstellung von Prepregs mit einer hohen Fasermasse von 500 bis 2500 g/m², das dadurch gekennzeichnet ist, daß man Faserstränge aus Glas, Kohlenstoff, Aramid, Keramik, Metall oder anderen anorganischen und/oder organishen Fesermaterialien gegebenenfalls zusammen mit Geweben, Gelegen, Vliesen oder Matten aus einem dieser Materialien ohne Zusatz von Lösungsmitteln mit duroplastishen Harzen tränkt und einer Doppelbandpresse zuführt, in deren erstem Teil, der Druckheizzone, das imprägnierte Fasermaterial unter Einwirkung von Druck und Wärme in den B-Zustand überführt und in deren zweitem Teil, der integrierten Druckkühlzone, unter Druck abkühlt, wodurch sich der B-Zustand stabilisiert, wobei
der Druck in der Druckheizzone von deren Beginn bis zu deren Ende von 0 bar auf 0,5 bis 3bar ansteigt und in der Druckkühlzone von deren Beginn bis zu deren Ende vom Enddruck der Druckheizzone auf bis zu 1 bis 3 bar ansteigt und der Druck am Ende der Druckkühlzone bis zu 0,5 bar über dem Druck am Ende der Druckheizzone liegt, und in
der Druckheizzone eine Temperatur von 90 bis 160 °C, vorzugsweise von 110 bis 150 °C, und am Ende der Druckkühlzone eine Temperatur von 50 bis 80 °C herrscht und diese Temperatur mindestens um 50 °C unter der Temperatur der Druckheizzone liegt.

Zur Durchführung des Verfahrens können folgende Fasern eingesetzt werden: Glasfasern aus E- oder R-Glas, Kohlenstofffasern, Aramidfasern, keramische, metallische oder andere anorganische und/oder organische Fasern. Die Fasern werden in Form von Rovings eingesetzt, wobei Glasfaserrovings aus E-Glas mit 1200 oder 2400 tex besonders bevorzugt sind. Es ist jedoch auch möglich, zusätzlich zu den Rovings Gewebe, Gelege, Vliese oder Matten mit einzusetzen. Die Möglichkeit zur Kombination von Rovings, die dem aus dem Prepreg hergestelltan Bauteil die besten mechanischen Eigenschaften in der Längsrichtung bringen, mit Geweben und dergleichen, die dem Bauteil zusätzlich Quer-und Torsionsfestigkeit bringen, sind ein wesentlicher Vorteil der Erfindung. Auch der Einsatz von Faserkombinationen, sogenannten Faserhybriden, ist möglich.

Als duroplastische Harze dienen vor allem lösungsmittelfreie Epoxidharzsysteme, die bei Raumtemperatur oder erhöhten Temperaturen flüssig sind und durch Wärmezufuhr in den: B-Zustand übergeführt werden können. Diese Epoxidharzsysteme sind vorzugsweise vom Bisphenol-A-Typ, gegebenenfalls mit einem Zusatz von anderen epoxidgruppenhaltigen Harzen und Zusatzstoffen, wie z. B. reaktiven Verdünnern, Flexibilisatoren und dergleichen.

Als Härter dienen etwa aromatische Amine, cycloaliphatische Amine, Amingemische z. B. aus aromatischen und cycloaliphatischen Aminen, Säureanhydride, latente Härter z. B. auf Basis von Imidazolen, Cyanamid, gegebenenfalls mit Zusatz von Beschleunigern, z. B. Benzyldimethylamin.

Zur Durchführung des Verfahrens wird ein Harzfilm mittels einer Harzauftragsvorrichtung, etwa einer Rakel auf eine Trennfolie aufgetragen. In diesen Harzfilm werden Rovings, gegebenenfalls zusammen mit Geweben, Gelegen, Vliesen oder Matten eingebracht, wobei die Zufuhr der Fasermaterien am besten so erfolgt, daß beim Kontakt mit dem Harzsystem die Benetzung von unten nach oben erfolgt, und somit der Luftraum zwischen den Faserfilamenten möglichst gleichmäßig mit dem Harz ausgefüllt wird. Vorteilhaft ist eine Beheizung dieser Tränkstrecke, wodurch die Viskosität des Harzes erniedrigt und die Faserbenetzung verbessert wird. Hier erfolgt eine Vorgelierung des Harz/Härtergemisches. Es ist auch möglich, der ersten Faserschicht unmittelbar nach der Tränkung zusätzliche, bereits imprägnierte Fasermaterialien zuzuführen.

Im ersten Teil der Doppelbandpresse, der sogenannten Druckheizzone, wird das imprägnierte Fasermaterial unter Einwirkung von Druck und Wärme in den B-Zustand übergeführt. Der Eintritt des imprägnierten und vorgelierten Faser/Harzverbundes erfolgt in der Weise, daß zwischen dem Ober- und Unterband der Doppelbandpresse ein keilförmiger Spalt eingestellt ist, wodurch der Druck auf das imprägnierte Fasermaterial kontinuierlich erhöht wird. Dies verhindert ein Herauspressen des anfänglich noch niedriger viskosen Harzes. Abhängig von der Art des verwendeten Harzes und Härters werden Druck, Temperatur und Produktionsgeschwindigkeit eingestellt. Die Temperatur in der Druckheizzone beträgt etwa 90 bis 160 °C, vorzugsweise 110 bis 150 °C. Der auf das imprägnierte Fasermaterial aufgebrachte Druck steigt vom Beginn bis zum Ende der Druckheizzone auf 0,5 bis 3 bar an.

Im zweiten Teil der Doppelbandpresse, der integrierten Druckkühlzone wird das heiße Prepreg unter Druck abgekühlt, wodurch sich der B-Zustand stabilisiert, und der Übergang in den vernetzten C-Zustand verhindert wird. Die Abkühlung erfolgt mit Hilfe der umlaufenden Stahlbänder der Doppelbandpresse unter Druck, wodurch eine rasche Wärmeabfuhr gewährleistet ist. Der B-Zustand des Harzes wird sozusagen "eingefroren", stabilisiert. Der Druck in der Druckkühlzone steigt vom Enddruck der Druckheizzone auf bis zu 1 bis 3 bar an und liegt am Ende der Druckkühlzone vorzugsweise bis zu 0,5 bar über dem Enddruck der Druckheizzone. Die Abkühlung erfolgt möglichst rasch auf etwa 50 bis 80 °C, wobei diese Temperatur mindestens um 50 °C unter der Temperatur der Druckheizzone liegt.

Durch die Aufrechterhaltung des Druckes in beiden Zonen wird eine gute Benetzung der Einzelfilamente mit dem Harz/Härtergemisch und eine konstante Prepregdicke über die gesamte Bahnbreite gewährleistet. Außerdem wird durch den ständig aufrechterhaltenen Druck die Faser quer zur Längsachse fixiert, die Tendenz zur Faserverschiebung in der Querrichtung wird verhindert.
Nach dem Verlassen der Doppelbandpresse kann das Prepreg in üblicher Weise auf einer Wickelvorrichtung aufgewickelt und gelagert werden. Die Produktionsgeschwindigkeit beträgt etwa 1 bis 6 m/min, vorzugsweise 2 bis 4 m/min.
Die Lagerstabilität der so hergestellten Prepregs ist sehr gut. Sie entspricht den üblichen Anforderungen und beträgt bei Verwendung üblicher Harz/Härtersysteme bei Raumtemperatur mindestens 2 Wochen, bei -18 °C mindestens 2 Monate.
Die so hergestellten Prepregs besitzen einen Fasergehalt von 500 bis 2500 g/m², vorzugsweise von 600 bis 1500 g/m², und können beispielweise zur Herstellung von Skiern oder Blattfedern verwendet werden.

### Beispiel 1:

In einer Doppelbandpresse mit einer Umlaufgeschwindigkeit von 3 m/min werden bei einer Produktionsbreie von 1000 mm 2400 tex Glasrovings (3,6 Fäden/cm ergeben einen Glasfasergehalt von 860 g/m²) in einen Harzfilm, bestehend aus 100 Gew.Teilen Bisphenol-A-Epoxidharz und einem Härtergemisch aus 13 Gew.-Teilen Isophorondiamin und 9,2 Gew.Teilen Diaminodiphehylmethan, eingebettet. In der Tränkstrecke werden die Glasfasern bei einer Temperatur von 90 °C imprägniert und gelangen anschließend in den Preßbereich der umlaufenden Stahlbänder, wo bei einer Temperatur von 140 °C und einem bis 1 bar ansteigenden Druck die Einstellung des Preprag B-Zustandes erfolgt. In der unmittelbar an die Druckheizzone anschließenden Druckkühlzone wird unter einem auf 1,5 bar ansteigenden Druck auf eine Temperatur von 80 °C abgekühlt.

Das auf diese Weise hergestellte Prepreg wird zu einer Rolle aufgewickelt und bis zur weiteren Verwendung in einem Kühlraum gelagert. Die Lagerstabilität bei Raumtemperatur beträgt mindestens zwei Wochen, bei -18 °C mindestens 2 Monate.

Die Prepregs sind charakterisiert durch eine trockene, glatte Oberfläche und eine gleichmäßige Dicke von 0,90 mm. Das Prepreg-Flächengewicht beträgt 1320 g/m², der Harzgehalt 35 Gew.%, der Harzfluß 4 Gew.%, flüchtige Anteile sind nicht meßbar.

### Beispiel 2:

In einer Doppelbandpresse mit einer Umlaufgeschwindigkeit von 3,5 m/min werden bei einer Produktionsbreite von 1000 mm 2400 tex Glasrovings (5 Fäden/cm ergeben einen Glasfasergehalt von 1200 g/m²) und ein Polyacrylfaservlies (Flächengewicht 25 g/m²) in einen Harzfilm, bestehend aus 100 Gew.Teilen Bisphenol-A-Epoxidharz und einem Härtergemisch aus 9,5 Gew.Teilen Cyanamid, 1,0 Gew.Teilen Adipinsäure und 1,0 Gew.Teilen Benzyldimethylamin, eingebettet. Die Imprägnierung in der Tränkstrecke erfolgt bei einer Temperatur von 100 °C, die Einstellung des B-Zustandes wird in der Druckheizzone bei einer Temperatur von 120 °C und einem auf 0,8 bar ansteigenden Druck durchgeführt. In der unmittelbar an die Druckheizzone anschließenden Druckkühlzone wird unter einem auf 1,3 bar ansteigenden Druck auf eine Temperatur von 60 °C abgekühlt.

Die Prepregs sind charakterisiert durch eine leicht klebrige, glatte Oberfläche und eine gleichmäßige Dicke von 1,3 mm. Das Prepregflächengewicht beträgt 1945 g/m², der Harzgehalt 37 Gew.%, der Harzfluß 20 Gew.%, flüchtige Anteile sind nicht meßbar.

Das auf diese Weise hergestellte Prepreg wird zu einer Rolle aufgewickelt und bis zur weiteren Verwendung in einem Kühlraum gelagert. Die Lagerstabilität bei Raumtemperatur beträgt mindestens 2 Wochen, bei -18 °C mindestens 2 Monate.

### Beispiel 3:

In einer Doppelbandpresse mit einer Umlaufgeschwindigkeit von 3,5 m/min werden bei einer Produktionsbreite von 1000 mm 2400 tex Glasrovings (5,4 Fäden/cm ergeben einen Glasfasergehalt von 1296 g/m²) und ein Kohlenstoff-Glasfasermischgewebe mit einem Flächengewicht von 170 g/m² in einen Harzfilm, bestehend aus 100 Gew.Teilen Bisphenol-A-Epoxidharz und 6 Gew.Teilen Härter 2-Ethyl-4-methylimidazol, eingebettet. Die Imprägnierung in der Tränkstrecke erfolgt bei einer Temperatur von 110 °C, die Einstellung des B-Zustandes wird in der Druckheizzone bei einer Temperatur von 130 °C und einem auf 1 bar ansteigenden Druck durchgeführt. In der unmittelbar an die Druckheizzone anschließenden Druckkühlzone wird unter einem auf 1,5 bar ansteigenden Druck auf eine Temperatur von 70 °C abgekühlt.

Die Prepregs sind charakterisiert durch eine trockene, glatte Oberfläche und eine gleichmäßige Dicke von 1,5 mm. Das Prepregflächengewicht beträgt 2190 g/m², der Harzgehalt 33 Gew.%, der Harzfluß 10 Gew.%, flüchtige Anteile sind nicht meßbar.

Das auf diese Weise hergestellte Prepreg wird zu einer Rolle aufgewickelt und bis zur weiteren Verwendung in einem Kühlraum gelagert. Die Lagerstabilität bei Raumtemperatur beträgt mindestens 2 Wochen, bie -18 °C mindestens 2 Monate.

## Patentansprüche

1. Verfahren zur kontinuierlichen Herstellung von Prepregs mit einer hohen Fasermasse von 500 bis 2500 g/m², dadurch gekennzeichnet, daß man Faserstränge aus Glas, Kohlenstoff, Aramid, Keramik, Metall oder anderen anorganischen und/oder organischen Fasermaterialien gegebenenfalls zusammen mit Geweben, Gelegen, Vliesen oder Matten aus einem dieser Materialien ohne Zusatz von Lösungsmitteln mit duroplastischen Harzen tränkt und einer Doppelbandpresse zuführt, in deren erstem Teil, der Druckheizzone, das imprägnierte Fasermaterial unter Einwirkung von Druck und Wärme in den B-Zustand überführt und in deren zweitem Teil, der integrierten Druckkühlzone, unter Druck abkühlt, wodurch sich der B-Zustand stabilisiert, wobei
der Druck in der Druckheizzone von deren Beginn bis zu deren Ende von 0 bar auf 0,5 bis 3bar ansteigt und in der Druckkühlzone von deren Beginn bis zu deren Ende vom Enddruck der Druckheizzone auf bis zu 1 bis 3 bar ansteigt und der Druck am Ende der Druckkühlzone bis zu 0,5 bar über dem Druck am Ende du Druckheizzone liegt, und in
der Druckheizzone eine Temperatur von 90 bis 160 °C, vorzugsweise von 110 bis 150 °C, und am Ende der Druckkühlzone eine Temperatur von 50 bis 80 °C herrscht und diese Temperatur mindestens um 50 °C untere der Temperatur der Druckheizzone liegt.

2. Verfahren nach Anspruch 1 dadurch gekennzeichnet, daß die Prepregs einen Fasergehalt von 600 bis 1500 g/m² aufweisen.

3. Verfahren nach Anspruch 1 oder 2, dadurch gekennzeichnet, daß die Faserstränge aus Glas sind.

## Claims

1. Process for the continuous production of prepregs with a high fibre content of 500 to 2,500 g/m², characterized in that fibre strands of glass, carbon, aramid, ceramic, metal or other inorganic and/or organic fibre materials, if appropriate together with woven fabrics, scrims, non-woven fabrics or mats of one of these materials, are impregnated with thermoset resins without the addition of solvents and fed to a double-belt press, in the first part of which, the pressure heating zone, the impregnated fibre material is converted to the B-stage under the effect of pressure and heat and in the second part of which, the integrated pressure cooling zone, it is cooled under pressure, as a result of which the B-stage stabilizes, the pressure in the pressure heating zone rising from 0 bar up to 0.5 to 3 bar from the beginning to the end of the pressure heating zone and in the pressure cooling zone rising, from the beginning to the end of the pressure cooling zone, from the final pressure of the pressure heating zone up to 1 to 3 bar and the pressure at the end of the pressure cooling zone being up to 0.5 bar above the pressure at the end of the pressure heating zone, and, in the pressure heating zone, a temperature of 90 to 160°C, preferably from 110 to 150°C prevailing, and at the end of the pressure cooling zone a temperature of 50 to 80°C prevailing and this temperature being at least 50°C below this temperature of the pressure heating zone.

2. Process according to Claim 1, characterized in that the prepregs have a fibre content of 600 to 1,500 g/m².

3. Process according to Claim 1 or 2, characterized in that the fibre strands are made of glass.

## Revendications

1. Procédé pour la fabrication en continu de préimprégnés à haute teneur en fibres, de 500 à 2500 g/m², **caractérisé** en ce qu'on imprègne de résines thermodurcissables, sans adjonction de solvants, des écheveaux de fibres de verre, carbone, aramide, céramique, métal ou autres matériaux de fibres inorganiques ou organiques, éventuellement conjointement avec des tissus, des nappes, des voiles ou des mats d'un de ces matériaux, et on les apporte à une presse à double bande, dans la première partie de laquelle, la zone de chauffage sous pression, on transforme en l'état "B" le matériau fibreux imprégné sous l'action de pression et de chaleur, et dans la deuxième partie de laquelle, la zone intégrée de refroidissement sous pression, on refroidit ledit matériau sous pression, de sorte que l'état "B" se stabilise,
la pression dans la zone de chauffage sous pression augmentant, du début à la fin de la zone, de 0 bar jusqu'à 0,5 - 3 bars et la pression dans la zone de refroidissement sous pression augmentant, du début à la fin de la zone, de la pression à la fin de la zone de chauffage sous pression jusqu'à 1 - 3 bars, et la pression à la fin de la zone de refroidissement sous pression étant jusqu'à 0,5 bar supérieure à la pression à la fin de la zone de chauffage sous pression, et
une température de 90 à 160 °C, de préférence de 110 à 150 °C, régnant dans la zone de chauffage sous pression et une température de 50 à 80 °C régnant à la fin de la zone de refroidissement sous pression, cette température étant inférieure d'au moins 50 °C à la température de la zone de chauffage sous pression.

2. Procédé selon la revendication 1, **caractérisé** en ce que les préimprégnés présentent une teneur en fibres de 600 à 1500 g/m².

3. Procédé selon la revendication 1 ou 2, **caractérisé** en ce que les écheveaux de fibres sont constitués de verre.
